Europäisches Patentamt

European Patent Office

Office européen des brevets

(19)

(11) Veröffentlichungsnummer: **0 464 421 A1**

(12) **EUROPÄISCHE PATENTANMELDUNG**

(21) Anmeldenummer: **91109719.4**

(22) Anmeldetag: **13.06.91**

(51) Int. Cl.5: **G05B 19/05**

(30) Priorität: **02.07.90 DE 4021100**

(43) Veröffentlichungstag der Anmeldung:
**08.01.92 Patentblatt 92/02**

(84) Benannte Vertragsstaaten:
**CH DE ES FR GB GR LI SE**

(71) Anmelder: **SIEMENS AKTIENGESELLSCHAFT**
**Wittelsbacherplatz 2**
**W-8000 München 2(DE)**

(72) Erfinder: **Fronk, Gerhard, Dipl.-Ing. (FH)**
**Eskilstunastrasse 29**
**W-8520 Erlangen(DE)**
Erfinder: **Krause, Reinhard, Dipl.-Ing. (FH)**
**Schillerstrasse 8**
**W-8551 Hemhofen(DE)**

(54) **Verfahren zum Betreiben eines Informationsübertragungsbusses.**

(57) Verfahren zum Betreiben eines der digitalen Informationsübertragung dienenen Busses (2,3,12), insbesondere des Busses einer speicherprogrammierbaren Steuerung, mit mindestens einer Busleitung (15), wobei an den Bus (2,3,12) Busteilnehmer (1,4,5,6) angeschlossen sind, die Tri-State-Bustreiber (14) und Schwellwertdetektoren (16) aufweisen, wobei zur Vermeidung instabiler Zustände der Schwellwertdetektoren (16) bei Signalpegeln im Bereich der Schaltschwelle der Schwellwertdetektoren (16) die Bustreiber (14) eines Busteilnehmers (1) am Ende einer Informationsübertragung Signalpegel, die nicht im Bereich der Schaltschwelle liegen, an den Bus (2,3,12) anlegen.

FIG 1

Die Erfindung betrifft ein Verfahren zum Betreiben eines der digitalen Informationsübertragung dienenden Busses, insbesondere des Busses einer speicherprogrammierbaren Steuerung, mit mindestens einer Busleitung, wobei an den Bus Busteilnehmer angeschlossen sind, die Tri-State-Bustreiber und Schwellwertdetektoren aufweisen.

Derartige Busse sind weitverbreitet und werden beispielsweise für die Verbindung von Steckbaugruppen für speicherprogrammierbare Steuerungen verwendet.

Am Ende einer Informationsübertragung wurden bisher die Bustreiber in den Zustand "hochohmig" geschaltet. In diesem Zustand sind die Signalpegel auf den Busleitungen nicht definiert. Um dadurch verursachte undefinierte Signalpegel an den Detektoreingängen zu vermeiden, die z.B. im Bereich der Schaltschwelle der Detektoren liegen können, wurden die Busleitungen über sogenannte Pull-Widerstände auf einen definierten Signalpegel von z.B. +5 V gelegt. Trotzdem traten Instabilitäten in den Detektoren auf, die zu hohem Stromverbrauch und Spannungseinbrüchen führten. Die dabei anfallende thermische Verlustleistung führte teilweise sogar zur Zerstörung der Detektoren, in jedem Fall aber zu einer Verkürzung der Lebensdauer.

Der Erfindung liegt die Aufgabe zugrunde, instabile Zustände der Schwellwertdetektoren und die damit verbundenen Nachteile zu vermeiden. Die Instabilitäten treten auf, weil die Schwellwertdetektoren Signalpegelanstiegszeiten unter 100 ns benötigen, die Anstiegszeit über die Pull-Widerstände hingegen 3 bis 10 ms beträgt.

Die Aufgabe wird dadurch gelöst, daß am Ende einer Informationsübertragung die Bustreiber eines Busteilnehmers Signalpegel, die nicht im Bereich der Schaltschwelle liegen, an den Bus anlegen.

In einer vorteilhaften Ausgestaltung der Erfindung ist die mindestens eine Busleitung über einen Widerstand an ein Bezugspotential, z.B. die Versorgungsspannung, angeschlossen, das nicht im Bereich der Schaltschwelle liegt, wobei am Ende einer Informationsübertragung der Bustreiber an die mindestens eine Busleitung einen Signalpegel anlegt, der zwischen der Schaltschwelle und dem Bezugspotentials liegt.

In einer weiteren vorteilhaften Ausgestaltung der Erfindung weist der Bus zwei Teilbusse auf, wobei der erste Teilbus der Übertragung eines ersten Teils einer Adresse dient, mit der ein Busteilnehmer selektiert wird, und der zweite Teilbus der gemultiplexten Übertragung eines zweiten Teils der Adresse sowie der Daten dient, wobei mit dem zweiten Teil einer Adresse ein Element, z.B. ein Speicherelement, des Busteilnehmers selektiert wird, wobei am Ende einer Informationsübertragung an den ersten Teilbus eine vorwählbare Teiladresse angelegt wird, die einem nicht existierenden Busteilnehmer entspricht, und wobei an den zweiten Teilbus beliebig vorwählbare Signalpegel angelegt werden, die nicht im Bereich der Schaltschwelle liegen.

Weitere Vorteile und Einzelheiten ergeben sich aus der nachfolgenden Beschreibung eines Ausführungsbeispiels und anhand der Zeichungen. Es zeigen

FIG 1 den Prinzipaufbau eines Busses,
FIG 2 den Prinzipaufbau eines De-/Multiplexers,
FIG 3 den Prinzipaufbau einer Busleitung und
FIG 4 den Prinzipaufbau des Eingangs eines Schwellwertdetektors.

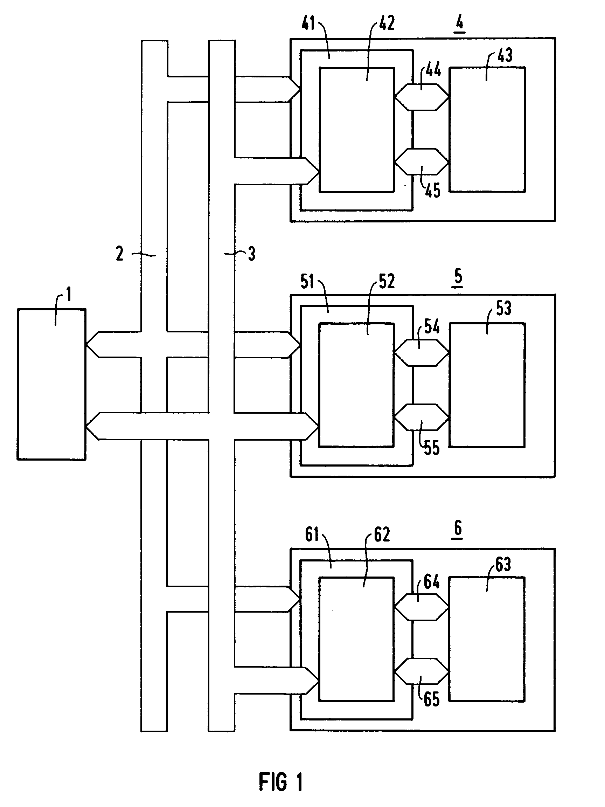

FIG 1 zeigt einen Koppelprozessor 1, der über einen Adreßbus 2 sowie einen Daten- und Adreßbus 3 mit Baugruppen 4, 5, 6 verbunden ist. Die Busse 2, 3 bestehen beispielsweise aus je acht Busleitungen. Die Baugruppen 4, 5, 6 weisen je ein Buskoppelmodul 41, 51, 61, einen Koppelspeicher 42, 52, 62, einen Baugruppenprozessor 43, 53, 63, sowie je einen internen Datenbus 44, 54, 64 und einen internen Adreßbus 45, 55, 65 auf. Nicht dargestellt in FIG 1 sind weitere Busleitungen wie z.B. die Read/Write-Leitung.

Die Informationsübertragung geschieht durch Anlegen von ersten Adreßsignalen an den Adreßbus 2, wodurch z.B. die Baugruppe 4 selektiert und damit aktiviert wird. Die Baugruppe 4 speichert die gleichzeitig auf den Daten- und Adreßbus 3 gelegten weiteren Adreßsignale und übernimmt die zu dieser Adresse gehörenden und anschließend übertragenen Nutzdaten in den Koppelspeicher 42. Der weitere Datenverkehr innerhalb der Baugruppe 4 ist für die hier vorliegende Erfindung nicht von Bedeutung. Es wäre aber z.B. möglich, auch die baugruppeninternen Busse 44, 45, 54, 55, 64, 65, mit dem erfindungsgemäßen Verfahren zu betreiben.

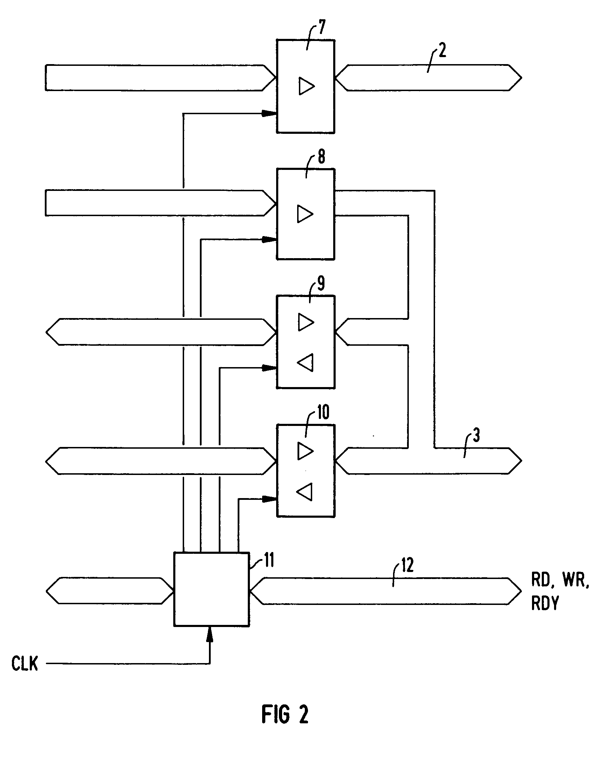

Die FIG 2 zeigt Sendeeinheiten 7, 8 zum Senden der Adreßsignale sowie kombinierte Sende-/Empfangseinheiten 9, 10 für die Datensignale. Die Sende-/Empfangseinheiten 9, 10 weisen als Detektoren beispielsweise hysteresefreie ACMOS-Gatter (A = advanced) mit Schaltzeiten von ca. 10 ns auf. Die Elemente 7 bis 10 werden von einer Kontrolleinheit 11 gesteuert, die auch Daten auf einen Kontrollbus 12 legt bzw. von diesem Bus 12 liest. Die Kontrolleinheit 11 wird mittels eines Taktsignals CLK getaktet. Die Kontrolleinheit 11 sendet z.B. ein Read-Signal RD bzw. ein Write-Signal WR aus und empfängt von der adressierten Baugruppe das Ready-Signal RDY.

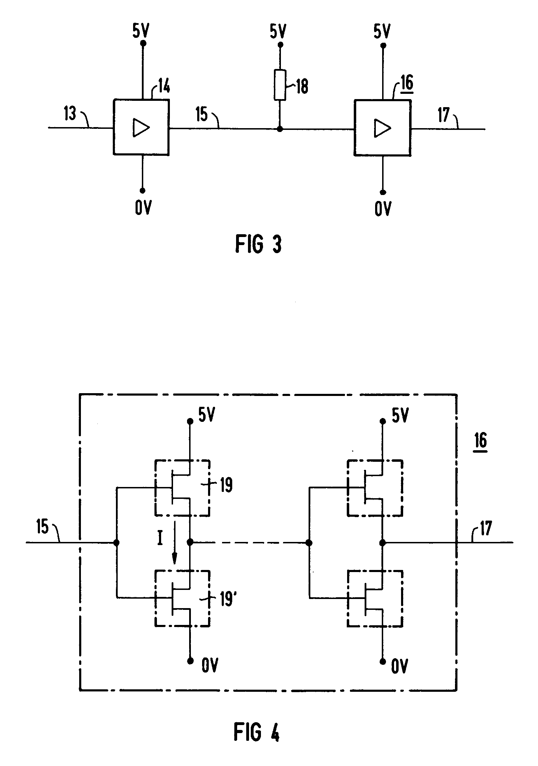

FIG 3 zeigt den Aufbau einer einzelnen Busleitung 15. Ein Tri-State-Bustreiber 14 ist über eine Busleitung 15 mit einem Schwellwertdetektor 16 verbunden. Ferner zeigt FIG 3, daß Bustreiber 14 und Detektor 16 an eine Spannungsversorgung U, z.B. + 5 V, sowie an Masse (0 V) angeschlossen sind. Der Treiber 14 verstärkt im Normalbetrieb das auf der Leitung 13 übermittelte Eingangssignal. Der Schwellwertdetektor 16 detektiert das über die Leitung 15 erhaltene Signal und legt in Abhängigkeit vom Eingangssignal entweder die Masse oder die Versorgungsspannung U an die Leitung 17. Wenn der Treiber 14 über eine nicht dargestellte Steuerleitung ein entsprechendes Signal erhält, geht er in den Zustand "hochohmig". Wenn das letzte ausgegebene Signal 0 V war, wird an die Leitung 15 über den Pull-Widerstand 18 eine Spannung U von z.B. + 5 V angelegt. Da der Widerstand 18 sehr groß ist, steigt die Spannung an der Leitung 15 nur langsam, typisch im Bereich zwischen 3 und 10 $\mu$s, an. Der Widerstand 18 muß so groß gewählt werden, da sonst der Bustreiber 14 wegen seiner begrenzten Stromverstärkung die Busleitung 15 nicht mehr treiben könnte. Wenn die Spannung die Schaltschwelle des Detektors 16 erreicht, wird der Detektor 16 instabil.

Gemäß FIG 4 weist der Eingang des Schwellwertdetektors 16 zwei in Reihe geschalteten ACMOS-FET 19, 19' auf, von denen der eine an Masse (0 V) und der andere an die Versorgungsspannung U angeschlossen ist. An der Verbindung der beiden FET 19, 19' greift die Ausgangsleitung 17 an, während die Leitung 15 an die Steuereingänge der FET 19, 19' angelegt ist. Wenn der Signalpegel der Leitung 15 im Bereich der Schaltschwelle ist, werden beide FET 19, 19' teilweise leitend. In der Folge ergibt sich ein hoher Querstrom I. Infolge des langsamen Anstiegs des Signalpegels ergibt sich eine lange Aufenthaltsdauer im Bereich der Schaltschwelle. Während dieser Aufenthaltsdauer bewirkt ein dem Signal überlagertes Spannungsrauschen ein sehr häufiges Durchlaufen des teilweise leitenden Zustands beider FETs 19 und 19' und aller nachfolgenden Schaltstufen. Die Summe aller Querströme kann so hoch sein, daß der Detektor 16 durch die dadurch auftretende thermische Belastung zerstört wird. Eine weitere Folge des Querstrom I kann sein, daß die Versorgungsspannung U der Baugruppe absinkt. Durch das Absinken der Versorgungsspannung U können z.B. gespeicherte Daten gelöscht werden, die Datensicherheit und auch die Betriebssicherheit sind nicht mehr gewährleistet. Signalpegel im Bereich der Schaltschwelle müssen folglich vermieden werden.

Eingangssignalpegel im Bereich der Schaltschwelle können nur dann für längere Zeit auftreten, wenn die Busse 2, 3, 12 für längere Zeit nicht in Betrieb sind, d.h. in der Pause zwischen zwei Informationsübertragungen. Daher werden in den Übertragungspausen an den Adreßbus 2 Signale angelegt, die eine nicht existierende Baugruppe selektieren, z.B. die Baugruppe mit der Adresse 0, an den Daten- und Adreßbus 3 Signalpegel, die außerhalb der Schaltschwelle der Schwellwertdetektoren 16 liegen, z.B. alle Leitungen an die Versorgungsspannung U gelegt, sowie an den Kontrollbus 12 ebenfalls Signalpegel, die außerhalb der Schaltschwelle der Schwellwertdetektoren 16 liegen, z.B. alle Leitungen an Masse, gelegt. Eine eventuell auftretende Fehlermeldung, z.B. daß sich die selektierte Baugruppe nicht meldet (weil sie nicht existiert), muß vom Betriebssystem des Koppelprozessors 1 abgefangen werden.

Alternativ dazu ist es z.B. möglich, eine Adresse einer Baugruppe anzusprechen, unabhängig davon, ob die Baugruppe existiert oder nicht, und durch entsprechende Kontrollsignale, z.B. gleichzeitiges Anlegen eines Read-Signals RD und eines Write-Signals WR, zu verhindern, daß die angesprochene Baugruppe aktiviert wird.

Die Busleitung 15 ist, wie oben erwähnt, über den Widerstand 18 an die Versorgungsspannung U angeschlossen. Der Signalpegel der Busleitung 15 durchläuft also bei hochohmigen Bustreiber 14 immer den Spannungsbereich vom letzten Signalpegel zur Spannung U. Eine weitere Möglichkeit zur Vermeidung instabiler Zustände der Schwellwertdetektoren besteht folglich darin, am Ende einer Informationsübertragung erst ein kurzes Signal mit dem Pegel der Spannung U auf die Busleitung 15 zu geben und dann den Bustreiber 14 hochohmig zu schalten.

Besonders vorteilhaft ist das oben beschriebene Verfahren bei Anwendungen, bei denen es auf hohe Funktionssicherheit ankommt, wie beispielsweise Kraftwerkssteuerungen oder Steuerungen von technischen Prozessen oder Werkzeugmaschinen.

**Patentansprüche**

1.  Verfahren zum Betreiben eines der digitalen Informationsübertragung dienenen Busses (2,3,12), insbesondere des Busses einer speicherprogrammierbaren Steuerung, mit mindestens einer Busleitung (15), wobei an den Bus (2,3,12) Busteilnehmer (1,4,5,6) angeschlossen sind, die Tri-State-Bustreiber (14) und Schwellwertdetektoren (16) aufweisen, **dadurch gekennzeichnet,** daß zur Vermeidung instabiler Zustände der Schwellwertdetektoren (16) bei Signalpegeln im Bereich der Schaltschwelle der Schwellwertdetektoren (16) die Bustreiber (14) eines Busteilnehmers (1) am Ende einer Informationsübertragung Signalpegel, die nicht im Bereich der Schaltschwelle liegen, an den Bus (2,3,12) anlegen.

2.  Verfahren nach Anspruch 1, **dadurch gekennzeichnet,** daß die mindestens eine Busleitung (15) über einen Widerstand (18) an ein Bezugspotential, z.B. die Versorgungsspannung (U), angeschlossen ist, das nicht im Bereich der Schaltschwelle liegt, und daß am Ende einer Informationsübertragung der Bustreiber (14) an die mindestens eine Busleilung (15) einen Signalpegel anlegt, der zwischen der Schaltschwelle und dem Bezugspotential liegt.

3. Verfahren nach Anspruch 1 oder 2, **dadurch gekennzeichnet,** daß der Bus (2,3,12) zwei Teilbusse (2,3) aufweist, wobei der erste Teilbus (2) der Übertragung eines ersten Teils einer Adresse dient, mit der ein Busteilnehmer (4,5,6) selektiert wird, und der zweite Teilbus (3) der gemultiplexten Übertragung eines zweiten Teils der Adresse sowie der Daten dient, wobei mit dem zweiten Teil einer Adresse ein Element, z.B. ein Speicherelement, des Busteilnehmers (4,5,6) selektiert wird, daß am Ende einer Informationsübertragung an den ersten Teilbus (2) eine vorwählbare Teiladresse angelegt wird, die einem nicht existierenden Busteilnehmer entspricht, und daß an den zweiten Teilbus (3) vorwählbare Signalpegel angelegt werden, die nicht im Bereich der Schaltschwelle liegen.

4. Verfahren nach Anspruch 1, 2 oder 3, **dadurch gekennzeichnet,** daß der Bus (2,3,12) einen Teilbus (12) aufweist, der der Übertragung von Kontrollsignalen dient, und daß am Ende einer Informationsübertragung an den Teilbus (12) Signale angelegt werden, die ein Aktivieren der anderen Busteilnehmern (4,5,6) verhindern, z.B. durch gleichzeitiges Anlegen eines Read-Signals (RD) und eines Write-Signals (WR).

FIG 1

FIG 2

FIG 3

FIG 4

Europäisches
Patentamt

**EUROPÄISCHER RECHERCHENBERICHT**

Nummer der Anmeldung

| | **EINSCHLÄGIGE DOKUMENTE** | | | EP 91109719.4 |
|---|---|---|---|---|
| **Kategorie** | **Kennzeichnung des Dokuments mit Angabe, soweit erforderlich, der maßgeblichen Teile** | | **Betrifft Anspruch** | **KLASSIFIKATION DER ANMELDUNG (Int. Cl.⁵)** |
| A | EP - A1 - 0 235 559<br>(SIEMENS)<br>* Gesamt *<br>-- | | 1-4 | G 05 B 19/05 |
| A | DE - A1 - 3 036 906<br>(SIEMENS)<br>* Gesamt *<br>-- | | 1-4 | |
| A | DE - A1 - 2 842 372<br>(SIEMENS)<br>* Gesamt *<br>-- | | 1-4 | |
| A | EP - A1 - 0 133 840<br>(S.A.R.L. SEMY ENGINEERING)<br>* Gesamt *<br>---- | | 1-4 | |
| | | | | **RECHERCHIERTE SACHGEBIETE (Int. Cl.⁵)**<br><br>G 05 B 15/00<br>G 05 B 19/00 |

Der vorliegende Recherchenbericht wurde für alle Patentansprüche erstellt.

| **Recherchenort**<br>WIEN | **Abschlußdatum der Recherche**<br>25-09-1991 | **Prüfer**<br>FIETZ |
|---|---|---|